(19) Europäisches Patentamt
European Patent Office
Office européen des brevets

(11) **EP 3 932 781 B1**

(12) **EUROPEAN PATENT SPECIFICATION**

(45) Date of publication and mention
of the grant of the patent:
**30.08.2023 Bulletin 2023/35**

(21) Application number: **21162837.5**

(22) Date of filing: **16.03.2021**

(51) International Patent Classification (IPC):
***B62D 15/02*** *(2006.01)*

(52) Cooperative Patent Classification (CPC):
**B62D 15/0285**

(54) **REVERSE TRAJECTORY TRACKING METHOD AND APPARATUS, ELECTRONIC DEVICE AND STORAGE MEDIUM**

VERFAHREN UND GERÄT ZUR UMGEKEHRTEN TRAJEKTORIENVERFOLGUNG, ELEKTRONISCHE VORRICHTUNG UND SPEICHERMEDIUM

PROCÉDÉ ET APPAREIL DE SUIVI DE TRAJECTOIRE INVERSE, DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2020 CN 202010614812**

(43) Date of publication of application:
**05.01.2022 Bulletin 2022/01**

(73) Proprietor: **Beijing Baidu Netcom Science and Technology Co., Ltd**
**Beijing 100085 (CN)**

(72) Inventor: **ZHANG, Lianchuan**
**Beijing, 100085 (CN)**

(74) Representative: **Hannke Bittner & Partner mbB**
**Regensburg**
**Prüfeninger Straße 1**
**93049 Regensburg (DE)**

(56) References cited:
WO-A1-2020/052887    JP-A- H03 189 805
US-A1- 2016 152 263    US-A1- 2017 233 001
US-A1- 2019 270 451    US-A1- 2020 156 694
US-B2- 10 046 803

# Description

## Technical Field

The present application relates to a field of autonomous driving, and in particular, to a field of autonomous parking and a field of trajectory tracking.

## Background

Existing trajectory tracking methods are mostly applied to a forward travel environment, and generally do not support reverse travel scenario. WO 2020/052887 discloses the preamble of claim 1.

## Summary of the Invention

The present application provides a reverse trajectory tracking method and apparatus, an electronic device and a storage medium.

According to an aspect of the present application, a reverse trajectory tracking method is provided, according to claim 1.

According to another aspect of the present application, a reverse trajectory tracking apparatus is provided, according to claim 5.

> a front wheel turning angle determination module configured for determining an expected front wheel turning angle of the vehicle based on the heading error, the lateral error and a speed of the vehicle; and an adjustment module configured for adjusting an actual front wheel turning angle of the vehicle according to the expected front wheel turning angle of the vehicle.

According to yet another aspect of the present application, a data processing device is provided according to claim 9.

According to yet another aspect of the present application, a non-transitory computer readable storage medium storing computer instructions is provided according to claim 10.

According to yet another aspect of the present application, a computer program product is provided according to claim 11.

It should be understood that the contents described herein are not intended to identify key or important features of the embodiments of the present application, or limit the scope of the present application. Other features of the present application will be easier to be understood by the following description.

## Brief Description of Drawings

The accompanying drawings are provided for better understanding of the present disclosure, and rather than limiting the present application, wherein:

Fig. 1 is a flow chart of implementing a reverse trajectory tracking method according to an embodiment of the present application;

Fig. 2 is a flow chart of implementing the determination of a heading error of a vehicle relative to a reference trajectory in a reverse trajectory tracking method according to an embodiment of the present application;

Fig. 3 is a schematic diagram of relative position of a bicycle model and a reference trajectory in a reverse trajectory tracking method according to an embodiment of the present application;

Fig. 4 is a structural schematic diagram of a reverse trajectory tracking apparatus 400 according to an embodiment of the present application;

Fig. 5 is a structural schematic diagram of a reverse trajectory tracking apparatus 500 according to an embodiment of the present application; and

Fig. 6 is a block diagram of an electronic device for implementing a reverse trajectory tracking method according to an embodiment of the present application.

## Detailed Description of Embodiments

Exemplary embodiments of the present application are described below with reference to the accompanying drawings, including various details of the embodiments of the present application to facilitate the understanding, and which should be considered as merely exemplary. Thus, it should be realized by those of ordinary skill in the art that various changes and modifications can be made to the embodiments described herein without departing from the scope of the present application, as defined by the appended claims.

Also, for the sake of clarity and conciseness, the contents of well-known functions and structures are omitted in the following description.

As described above, existing trajectory tracking methods are mostly applied to a forward travel environment, and generally do not support reverse travel scenario. Current reverse trajectory tracking methods are usually used in a parking system, which mainly adopts an arc-based planning scheme. Such a scheme has a certain requirement for the reference trajectory, which is normally composed of arcs and straight lines. Therefore, the current reverse trajectory tracking methods have a high requirement for the reference trajectory with low flexibility and a narrow range of applications.

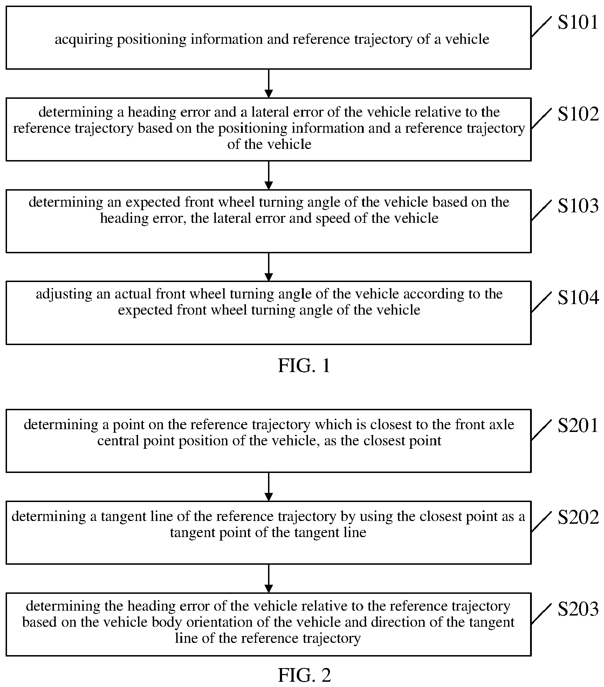

An embodiment of the present application provides a reverse trajectory tracking method. Fig. 1 is a flow chart of implementing a reverse trajectory tracking method according to an embodiment of the present application, which may include the following steps:

> S101, acquiring positioning information and a reference trajectory (reference path) of a vehicle;
> S102, determining a heading error and a lateral error of the vehicle relative to the reference trajectory, based on the positioning information and the reference trajectory of the vehicle;

S 103, determining an expected front wheel turning angle of the vehicle, based on the heading error, the lateral error and a speed of the vehicle; and

S104, adjusting an actual front wheel turning angle of the vehicle according to the expected front wheel turning angle of the vehicle.

The reverse trajectory tracking method according to the embodiment of the present application may be applied to an autonomous vehicle, and also to a nonautonomous vehicle.

Optionally, the above positioning information of the vehicle may include such information as position (for example, the front axle central point position of the vehicle, the rear axle central point position of the vehicle, and/or a geometric central point position of the vehicle), vehicle-body orientation, speed, and the like, of the vehicle.

In some embodiments, as shown in Fig. 2, the determining the heading error of the vehicle relative to the reference trajectory in S 102 includes:

S201, determining a point on the reference trajectory which is closest to the front axle central point position of the vehicle is determined, as the closest point;

S202, determining a tangent line of the reference trajectory by using the closest point as a tangent point;

S203, determining the heading error of the vehicle relative to the reference trajectory based on the vehicle body orientation of the vehicle and the direction of the tangent line of the reference trajectory.

In some embodiments, the determining the lateral error of the vehicle relative to the reference trajectory in S 102 may include: determining the shortest distance between the front axle central point position of the vehicle and the reference trajectory, and using the shortest distance as the lateral error of the vehicle relative to the reference trajectory.

In S103, the expected front wheel turning angle of the vehicle is determined using the following equation (1):

$$\beta = \theta_e + tan^{-1}(\frac{k*cte}{v}) ; \qquad \qquad ...(1)$$

where, $\beta$ is the expected front wheel turning angle of the vehicle;

$\theta_e$ is the heading error;

$cte$ is the lateral error;

$v$ is the speed of the vehicle, which is a scalar; and $k$ is a preset coefficient, which is used to guarantee the calculation accuracy.

In an actual angle determination process, the model of the vehicle may be simplified as a bicycle model. Accordingly, related data may be determined both in S 102 and S 103 by using the bicycle model. The bicycle model is a simplified controlled object, and the model of the vehicle may be simplified as the bicycle model when the vehicle is travelling at a low speed. Assuming that the vehicle has a structure like a bicycle, that is to say, two front wheels of the vehicle have an identical angel and rotating speed etc., and two rear wheels of the vehicle also have an identical angel and rotating speed etc., the two front wheels and the two rear wheels may be represented as one tire, respectively, and thereby a bicycle model is formed. Front wheel of the bicycle model is located at the central position of the two front wheels of the vehicle, i.e., the front axle central point of the vehicle; rear wheel of the bicycle model is located at the central position of the two rear wheels of the vehicle, i.e., the rear axle central point of the vehicle.

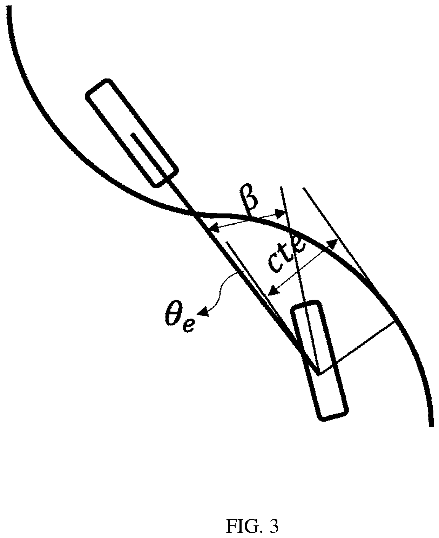

An illustrative implementation to determine the expected front wheel turning angle using the bicycle model will be described with reference to Fig. 3 below. Fig. 3 illustratively shows positions of a bicycle model and a reference trajectory in a reverse trajectory tracking method according to an embodiment of the present application.

As shown in Fig. 3, two long, narrow rectangles and a connection line between the two rectangles constitute the bicycle model, where the rectangle with two of its edges being positioned along the same direction as that of the connection line is the rear wheel of the bicycle model and the rectangle with no edges being positioned along the same direction as that of the connection line is the front wheel of the bicycle model. It can be found that, the direction of the connection line is consistent with the vehicle body orientation of the vehicle. In the embodiment of the present application, the angle between the front wheel of the bicycle model and the connection line may be determined ($\beta$ in Fig. 3), and the angle may be used as the expected front wheel turning angle of the vehicle. The irregular curve shown in Fig. 3 may be the reference trajectory.

In the illustrative implementation, input information may include the positioning information and the reference trajectory of the vehicle, and output information may include the expected front wheel turning angle of the vehicle, i.e., $\beta$ in Fig. 3 and the equation (1) above.

As shown in Fig. 3 and the above equation (1), $\beta$ consists of $\theta_e$ and another angle, where $\theta_e$ may be a heading error of the vehicle relative to the reference trajectory, i.e., the angle between the vehicle body orientation and a direction of a tangent line of the reference trajectory, and the tangent point of the tangent line is such a point on the reference trajectory, which is closest to the front axle central point of the vehicle (namely, the central point of the front wheel of the bicycle model).

With reference to the above equation (1), the another angle composing a portion of $\beta$ is expressed as

$tan^{-1}(\frac{k*cte}{v})$ , where *cte* is the lateral error of the vehicle relative to the reference trajectory, i.e., the shortest distance between the front axle central point position of the vehicle and the reference trajectory; *v* is current speed of the vehicle; and *k* is a preset coefficient.

The expected front wheel turning angle of the vehicle is determined by calculation of the above equation (1) using the positioning information and the reference trajectory of the vehicle. In some implementations, in the trajectory tracking process according to embodiments of the present application, new positioning information of the vehicle may be acquired constantly as the positioning information of the vehicle changes; the expected front wheel turning angle of the vehicle may be recalculated according to new positioning information of the vehicle and the corresponding reference trajectory; and the actual front wheel turning angle of the vehicle may be adjusted in real time according to the expected front wheel turning angle of the vehicle, thereby realizing the effects such as accurate trajectory tracking.

The reverse trajectory tracking method according to embodiments of the present application may be applied to a technical field of parking, and may also be applied to other scenarios such as reversing vehicle, for example, such a reversing vehicle scenario where a vehicle is reversing when passing through a narrow road. In embodiments of the present application, there is no specific requirement for shape of a reference trajectory, and the reference trajectory may be any curve, any straight line or any combination of curves and straight lines. The computation amount for determining the expected front wheel turning angle of the vehicle is relatively low. Therefore, compared with the related art, the reverse trajectory tracking method according to embodiments of the present application are more flexible with much broader application scenarios.

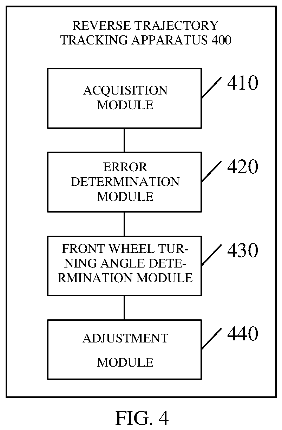

An embodiment of the present application further provides a reverse trajectory tracking apparatus. Fig. 4 is a structural schematic diagram of a reverse trajectory tracking apparatus 400 according to an embodiment of the present application. The reverse trajectory tracking apparatus 400 may include:

an acquisition module 410 configured for acquiring positioning information and reference trajectory of a vehicle;
an error determination module 420 configured for determining a heading error and a lateral error of the vehicle relative to the reference trajectory based on the positioning information and the reference trajectory of the vehicle;
a front wheel turning angle determination module 430 configured for determining an expected front wheel turning angle of the vehicle based on the heading error, the lateral error and a speed of the vehicle; and

an adjustment module 440 configured for adjusting an actual front wheel turning angle of the vehicle according to the expected front wheel turning angle of the vehicle.

In some implementations, the positioning information of the vehicle may include a front axle central point position and a vehicle body orientation of the vehicle.

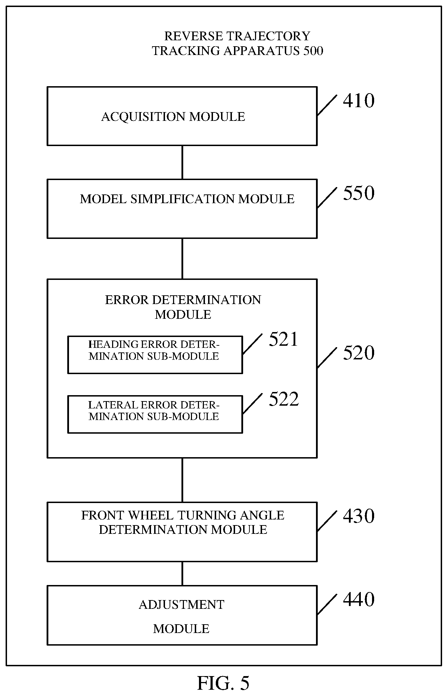

Fig. 5 is a structural schematic diagram of a reverse trajectory tracking apparatus 500 according to an embodiment of the present application. The reverse trajectory tracking apparatus 500 may include an acquisition module 410, an error determination module 520, a front wheel turning angle determination module 430 and an adjustment module 440. Wherein, the error determination module 520 may include:

a heading error determination sub-module 521 configured for determining a point on the reference trajectory which is closest to the front axle central point position of the vehicle, as the closest point; determining a tangent line of the reference trajectory by using the closest point as the tangent point; and determining the heading error of the vehicle relative to the reference trajectory based on the vehicle body orientation of the vehicle and the direction of the tangent line of the reference trajectory.

In some implementations, the positioning information of the vehicle may include a front axle central point position of the vehicle.

As shown in Fig. 5, the error determination module 520 may include:

a lateral error determination sub-module 522 configured for determining a shortest distance between the front axle central point position of the vehicle and the reference trajectory, and using the shortest distance as the lateral error of the vehicle relative to the reference trajectory.

The front wheel turning angle determination module 430 is configured to use the following equation to determine the expected front wheel turning angle of the vehicle:

$$\beta = \theta_e + tan^{-1}(\frac{k*cte}{v});$$

where, $\beta$ is the expected front wheel turning angle of the vehicle;
$\theta_e$ is the heading error;
*cte* is the lateral error;
*v* is the speed of the vehicle;
*k* is a preset coefficient.

As shown in Fig. 5, the apparatus mentioned above may further include a model simplification module 550 configured for determining a bicycle model of the vehicle based on the positioning information of the vehicle.

Wherein, the above error determination module 520 and the front wheel turning angle determination module 430 use the bicycle model to perform the determination.

The function of each module in each of the apparatuses according to embodiments of the present application may refer to corresponding descriptions in the above method, which will not be repeated here.

According to embodiments of the present application, a data processing device, a readable storage medium and a computer program product are also provided herein.

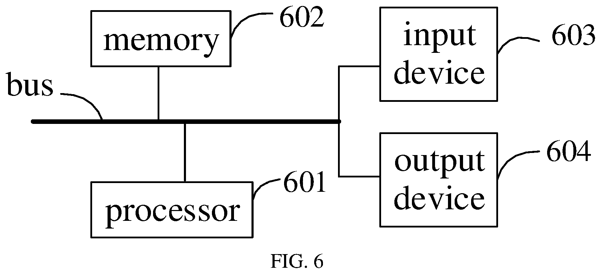

As shown in FIG. 6, it is a block diagram of a data processing device for implementing a reverse trajectory tracking method according to an embodiment of the present application. The electronic device is intended to represent various forms of digital computers, such as laptop computers, desktop computers, workbenches, personal digital assistants, servers, blade servers, mainframe computers, and other suitable computers. Electronic apparatuses may also represent various forms of mobile devices, such as personal digital assistants, cellular phones, smart phones, wearable devices, and other similar computing devices. The components shown herein, their connections and relationships, and their functions are merely examples, and are not intended to limit the implementation of the present application described and/or claimed herein.

As shown in FIG. 6, the electronic data processing device includes one or more processors 601, a memory 602, and may include interfaces for connecting various components which include a high-speed interface and a low-speed interface. The various components are connected to each other using different buses and may be installed on a common motherboard or installed in other ways as needed. The processor may process instructions executed within the electronic device, including instructions which are stored in the memory or on the memory to display graphic information of a graphical user interface (GUI) on an external input/output device (such as a display device coupled to the interface). In other embodiments, multiple processors and/or multiple buses may be used with multiple memories if desired. Similarly, multiple electronic devices may be connected, and each device provides a part of necessary operations (for example, as a server array, a group of blade servers, or a multi-processor system). In FIG. 6, one processor 601 is taken as an example.

The memory 602 may be a non-transitory computer readable storage medium provided by the present application. The memory stores instructions executable by at least one processor, so that the at least one processor executes the reverse trajectory tracking method provided by the present application. The non-transitory computer readable storage medium of the present application stores computer instructions, which are used to cause the computer to perform the reverse trajectory tracking method provided by the present application.

The memory 602, as a non-transitory computer readable storage medium, may be used to store non-transitory software programs, non-transitory computer executable programs and modules, such as program instructions/modules (for example, the acquisition module 410, the error determination module 420, the front wheel turning angle determination module 430 and the adjustment module 440 shown in FIG. 4) corresponding to the reverse trajectory tracking method in embodiments of the present application. The processor 601 executes various functional applications and data processing of the server by executing the non-transitory software programs, instructions, and modules stored in the memory 602, that is, implements the reverse trajectory tracking method in foregoing method embodiments.

The memory 602 may include a storage program area and a storage data area, where the storage program area may store an operating system and application programs required by at least one function, and the storage data area may store the data created based on the use of the electronic device for reverse trajectory tracking, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories set remotely relative to the processor 601, and these remote memories may be connected to the electronic device for reverse trajectory tracking through a network. Instances of the above network include but are not limited to the Internet, an intranet, a local area network, a mobile communication network, and combinations thereof.

An electronic device for reverse trajectory tracking may further include: an input device 603 and an output device 604. The processor 601, the memory 602, the input device 603 and the output device 604 may be connected through a bus or in other ways. In FIG. 6, the connection through a bus is taken as an example.

The input device 603, such as a touch screen, a keypad, a mouse, a trackpad, a touchpad, an indication rod, one or more mouse buttons, a trackball, a joystick, etc. may receive input numeric or character information, and generate key signal inputs related to user settings and function control of the electronic device for reverse trajectory tracking. The output device 604 may include a display apparatus, an auxiliary lighting device (for example, LED), a tactile feedback device (for example, a vibration motor), and the like. The display apparatus may include, but is not limited to, a liquid crystal display (LCD), a light emitting diode (LED) display, and a plasma display. In some embodiments, the display apparatus may be a touch screen.

Various embodiments of the systems and techniques described herein may be implemented in digital electronic circuit systems, integrated circuit systems, application specific integrated circuits (ASICs), computer hardware, firmware, software, and/or combination thereof. These various embodiments may include: implementations in one or more computer programs which may be executed and/or interpreted on a programmable system that includes at least one programmable processor, which may be a dedicated or general-purpose programmable processor that may receive data and instructions from a storage system, at least one input device, and at least one output device, and transmit the data and instructions to the storage system, the at least one input device, and the at least one output device.

These computer programs (also called as programs, software, software applications, or codes) include machine instructions of programmable processors, and these computer programs may be implemented using a high-level process and/or objectoriented programming language, and/or an assembly/machine language. As used herein, the terms "machine readable medium" and "computer readable medium" refer to any computer program product, apparatus, and/or device (for example, a magnetic disk, an optical disk, a memory, a programmable logic device (PLD)) used to provide machine instructions and/or data to a programmable processor, including the machine readable medium that receives machine instructions as machine readable signals. The term "machine readable signal" refers to any signal used to provide machine instructions and/or data to the programmable processor.

In order to provide interactions with a user, the system and technology described herein may be implemented on a computer which has: a display device (for example, CRT (Cathode Ray Tube) or LCD (liquid crystal display) monitor) for displaying information to the user; and a keyboard and pointing device (for example, a mouse or a trackball) through which the user may provide input to the computer. Other kinds of devices may also be used to provide interactions with a user; for example, the feedback provided to a user may be any form of sensory feedback (for example, visual feedback, auditory feedback, or tactile feedback); and input from a user may be received using any form (including acoustic input, audio signal input, or tactile input).

The systems and techniques described herein may be implemented in a computing system (for example, as a data server) that includes back-end components, or a computing system (for example, an application server) that includes middleware components, or a computing system (for example, a user computer with a graphical user interface or a web browser through which the user may interact with the implementation of the systems and technologies described herein) that includes front-end components, or a computing system that includes any combination of such back-end components, intermediate components, or front-end components. The components of the system may be interconnected by any form or medium of digital data communication (for example, a communication network). Examples of communication networks include: a Local Area Network (LAN), a Wide Area Network (WAN), and the Internet.

The computer system may include a client and a server. The client and the server are generally remote from each other and typically interact through a communication network. The client-server relationship is generated by computer programs that run on respective computers and have a client-server relationship with each other. The server may be a cloud server, also referred to as could computing server or cloud host, which is a kind of host product in a cloud computing service architecture for dealing with the defects existing in services of traditional physical hosts and virtual private servers (VPS), such as severe difficulty on management and weak extendibility on services.

It should be understood that various forms of processes shown above may be used to reorder, add, or delete steps. For example, respective steps described in the present application may be executed in parallel, or may be executed sequentially, or may be executed in a different order, as long as the desired result of the technical solution disclosed in the present application can be achieved, no limitation is made herein.

The above specific embodiments do not constitute a limitation on the protection scope of the present application.

**Claims**

1. A reverse trajectory tracking method, comprising:

   acquiring (S101) positioning information and a reference trajectory of a vehicle;
   determining (S102) a heading error and a lateral error of the vehicle relative to the reference trajectory, based on the positioning information and the reference trajectory of the vehicle;
   determining (S103) an expected front wheel turning angle of the vehicle, based on the heading error, the lateral error and a speed of the vehicle; and
   adjusting (S104) an actual front wheel turning angle of the vehicle according to the expected front wheel turning angle of the vehicle, **characterised in that** determining (S103) the expected front wheel turning angle of the vehicle, based on the heading error, the lateral error and the speed of the vehicle, comprises:
   determining the expected front wheel turning angle of the vehicle by using a following equation:

   $$\beta = \theta_e + tan^{-1}\left(\frac{k*cte}{v}\right);$$

   where, $\beta$ is the expected front wheel turning angle of the vehicle;
   $\theta_e$ is the heading error;
   $cte$ is the lateral error;

*v* is the speed of the vehicle; and
*k* is a preset coefficient.

2. The method according to claim 1, wherein the positioning information of the vehicle comprises a front axle central point position and a vehicle body orientation of the vehicle;
the determining the heading error of the vehicle relative to the reference trajectory, based on the positioning information and the reference trajectory of the vehicle, comprises:

determining (S201) a point on the reference trajectory which is closest to the front axle central point position of the vehicle, as the closest point;
determining (S202) a tangent line of the reference trajectory by using the closest point as a tangent point of the tangent line; and
determining (S203) the heading error of the vehicle relative to the reference trajectory based on the vehicle body orientation of the vehicle and a direction of the tangent line of the reference trajectory.

3. The method according to claim 1, wherein the positioning information of the vehicle comprises a front axle central point position of the vehicle;
the determining (S102) the lateral error of the vehicle relative to the reference trajectory, based on the positioning information and the reference trajectory of the vehicle, comprises:
determining a shortest distance between the front axle central point position of the vehicle and the reference trajectory, and using the shortest distance as the lateral error of the vehicle relative to the reference trajectory.

4. The method according to any one of claims 1-3, further comprising: determining a bicycle model of the vehicle, based on the positioning information of the vehicle;
wherein, determining the heading error and the lateral error of the vehicle relative to the reference trajectory and the expected front wheel turning angle of the vehicle comprises:
performing the determining the heading error and the lateral error of the vehicle relative to the reference trajectory and the expected front wheel turning angle of the vehicle, by using the bicycle model of the vehicle and the reference trajectory.

5. A reverse trajectory tracking apparatus, comprising:

an acquisition module (410) configured for acquiring positioning information and a reference trajectory of a vehicle;
an error determination module (420) configured for determining a heading error and a lateral error of the vehicle relative to the reference trajectory, based on the positioning information and the reference trajectory of the vehicle;
a front wheel turning angle determination module (430) configured for determining an expected front wheel turning angle of the vehicle based on the heading error, the lateral error and a speed of the vehicle; and
an adjustment module (440) configured for adjusting an actual front wheel turning angle of the vehicle according to the expected front wheel turning angle of the vehicle, **characterised in that** the front wheel turning angle determination module (430) is configured for determining the expected front wheel turning angle of the vehicle by using a following equation:

$$\beta = \theta_e + tan^{-1}(\frac{k*cte}{v});$$

where, $\beta$ is the expected front wheel turning angle of the vehicle;
$\theta_e$ is the heading error;
*cte* is the lateral error;
*v* is the speed of the vehicle; and
*k* is a preset coefficient.

6. The apparatus according to claim 5, wherein the positioning information of the vehicle comprises a front axle central point position and a vehicle body orientation of the vehicle;
the error determination module comprises:
a heading error determination sub-module (521) configured for determining a point on the reference trajectory which is closest to the front axle central point position of the vehicle, as the closest point; determining a tangent line of the reference trajectory by using the closest point as the a tangent point of the tangent line; and determining the heading error of the vehicle relative to the reference trajectory based on the vehicle body orientation of the vehicle and a direction of the tangent line of the reference trajectory.

7. The apparatus according to claim 5, wherein the positioning information of the vehicle comprises a front axle central point position of the vehicle;
the error determination module comprises:
a lateral error determination sub-module (522) configured for determining a shortest distance between the front axle central point position of the vehicle and the reference trajectory, and using the shortest distance as the lateral error of the vehicle relative to the reference trajectory.

8. The apparatus according to any one of claims 5-7, further comprising: a model simplification module

(550) configured for determining a bicycle model of the vehicle based on the positioning information of the vehicle;

the error determination module and the front wheel turning angle determination module perform the determining the heading error and the lateral error of the vehicle relative to the reference trajectory and the expected front wheel turning angle of the vehicle, by using the bicycle model and the reference trajectory.

9. A data processing device, comprising,

at least one processor (601); and
a memory (602) communicatively connected to the at least one processor; wherein
the memory stores instructions executable by the at least one processor, the instructions, when executed by the at least one processor, cause the at least one processor to perform the method according to any one of claims 1-4.

10. A non-transitory computer-readable storage medium (602) storing computer instructions, wherein the computer instructions, when executed by a computer, cause the computer to execute the method according to any one of claim 1-4.

11. A computer program product comprising computer program instructions, the computer program instructions, when executed by a computer, cause the computer to perform the method according to any one of claims 1 to 4.

**Patentansprüche**

1. Verfahren zur Verfolgung einer umgekehrten Fahrbahn, umfassend:

Erfassen (S101) von Positionsinformationen und einer Referenzbahn eines Fahrzeugs;
Bestimmen (S102) eines Kursfehlers und eines Seitenfehlers des Fahrzeugs relativ zur Referenzbahn, basierend auf den Positionsinformationen und der Referenzbahn des Fahrzeugs;
Bestimmen (S103) eines erwarteten Vorderrad-Einschlagwinkels des Fahrzeugs auf der Grundlage des Kursfehlers, des Seitenfehlers und einer Geschwindigkeit des Fahrzeugs; und
Einstellen (S104) eines tatsächlichen Vorderradeinschlagwinkels des Fahrzeugs entsprechend dem erwarteten Vorderradeinschlagwinkel des Fahrzeugs,
**dadurch gekennzeichnet, dass**
Bestimmen (S103) des erwarteten Vorderradeinschlagwinkels des Fahrzeugs auf der Grundlage des Kursfehlers, des Seitenfehlers und der Geschwindigkeit des Fahrzeugs, umfassend:
Bestimmung des erwarteten Vorderradeinschlagwinkels des Fahrzeugs mit Hilfe der folgenden Gleichung:

$$\beta = \theta_e + tan^{-1}(\frac{k*cte}{v});$$

wobei $\beta$ der erwartete Vorderradeinschlagwinkel des Fahrzeugs ist;
$\theta_e$ ist der Kursfehler;
$cte$ ist der Seitenfehler;
$v$ ist die Geschwindigkeit des Fahrzeugs; und
$k$ ist ein voreingestellter Koeffizient.

2. Verfahren nach Anspruch 1, wobei die Positionsinformationen des Fahrzeugs eine Vorderachs-Mittelpunktposition und eine Karosserieausrichtung des Fahrzeugs umfassen;
das Bestimmen des Kursfehlers des Fahrzeugs relativ zu der Referenzbahn, auf Grundlage der Positionsinformation und der Referenzbahn des Fahrzeugs, umfassend:

Bestimmen (S201) eines Punktes auf der Referenzbahn, welcher der Vorderachs-Mittelpunktposition des Fahrzeugs am nächsten liegt, als nächstgelegener Punkt;
Bestimmen (S202) einer Tangentenlinie der Referenzbahn unter Verwendung des nächstgelegenen Punktes als Tangentenpunkt der Tangentenlinie; und
Bestimmen (S203) des Kursfehlers des Fahrzeugs relativ zu der Referenzbahn auf der Grundlage der Fahrzeugkörperausrichtung des Fahrzeugs und einer Richtung der Tangente der Referenzbahn.

3. Verfahren nach Anspruch 1, wobei die Positionsinformation des Fahrzeugs eine Vorderachs-Mittelpunktposition des Fahrzeugs umfasst; das Bestimmen (S102) des seitlichen Fehlers des Fahrzeugs relativ zu der Referenzbahn, auf Grundlage der Positionierungsinformation und der Referenztrajektorie des Fahrzeugs, umfasst:
Bestimmen eines kürzesten Abstands zwischen der Vorderachs-Mittelpunktposition des Fahrzeugs und der Referenzbahn und Verwenden des kürzesten Abstands als Seitenfehler des Fahrzeugs relativ zur Referenzbahn.

4. Verfahren nach einem der Ansprüche 1 bis 3, ferner umfassend: Bestimmen eines Radmodells des Fahrzeugs auf der Grundlage der Positionsinformationen des Fahrzeugs;
wobei das Bestimmen des Kursfehlers und des Seitenfehlers des Fahrzeugs relativ zur Referenzbahn und des erwarteten Vorderradeinschlagwinkels des Fahrzeugs umfasst:

Durchführung der Bestimmung des Kursfehlers und des Seitenfehlers des Fahrzeugs relativ zur Referenzbahn und des erwarteten Vorderradeinschlagwinkels des Fahrzeugs unter Verwendung des Radmodells des Fahrzeugs und der Referenzbahn.

5. Eine Vorrichtung zur Verfolgung der umgekehrten Fahrbahn, umfassend:

ein Erfassungsmodul (410), das zum Erfassen von Positionsinformationen und einer Referenzbahn eines Fahrzeugs konfiguriert ist;
ein Fehlerbestimmungsmodul (420), das zum Bestimmen eines Kursfehlers und eines Seitenfehlers des Fahrzeugs relativ zu der Referenzbahn auf der Grundlage der Positionsinformationen und der Referenzbahn des Fahrzeugs konfiguriert ist;
ein Vorderradeinschlagwinkel-Bestimmungsmodul (430), das zum Bestimmen eines erwarteten Vorderradeinschlagwinkels des Fahrzeugs auf der Grundlage des Kursfehlers, des Seitenfehlers und einer Geschwindigkeit des Fahrzeugs konfiguriert ist; und
ein Einstellmodul (440), das so konfiguriert ist, dass es einen tatsächlichen Vorderradeinschlagwinkel des Fahrzeugs entsprechend dem erwarteten Vorderradeinschlagwinkel des Fahrzeugs einstellt,
**dadurch gekennzeichnet, dass**
das Modul (430) zur Bestimmung des Vorderradeinschlagwinkels konfiguriert ist, dass es den erwarteten Vorderradeinschlagwinkel des Fahrzeugs unter Verwendung einer folgenden Gleichung bestimmt:

$$\beta = \theta_e + tan^{-1}\left(\frac{k*cte}{v}\right);$$

wobei $\beta$ der erwartete Vorderradeinschlagwinkel des Fahrzeugs ist;
$\theta_e$ ist der Kursfehler;
$cte$ ist der Seitenfehler;
$v$ ist die Geschwindigkeit des Fahrzeugs; und
$k$ ist ein voreingestellter Koeffizient.

6. Vorrichtung nach Anspruch 5, wobei die Positionsinformation des Fahrzeugs eine Vorderachs-Mittelpunktposition und eine Karosserieausrichtung des Fahrzeugs umfassen;
das Modul zur Fehlerbestimmung umfasst:
ein Untermodul (521) zur Bestimmung des Kursfehlers, das so konfiguriert ist, dass es einen Punkt auf der Referenzbahn, welcher der Position des Vorderachsmittelpunkts des Fahrzeugs am nächsten ist, als den nächstgelegenen Punkt bestimmt; bestimmen einer Tangentenlinie der Referenzbahn unter Verwendung des nächstgelegenen Punkts als den Tangentenpunkt der Tangentenlinie bestimmt; und bestimmten des Kursfehlers des Fahrzeugs relativ zur Referenzbahn auf der Grundlage der Fahrzeugkörperausrichtung des Fahrzeugs und einer Richtung der Tangentenlinie der Referenzbahn.

7. Vorrichtung nach Anspruch 5, wobei die Positionsinformation des Fahrzeugs eine Vorderachsmittelpunktposition des Fahrzeugs umfasst;
das Modul zur Fehlerbestimmung umfasst:
ein Untermodul (522) zur Bestimmung des Seitenfehlers, das so konfiguriert ist, dass es einen kürzesten Abstand zwischen der VorderachsMittelpunktposition des Fahrzeugs und der Referenzbahn bestimmt und den kürzesten Abstand als den Seitenfehler des Fahrzeugs relativ zur Referenzbahn verwendet.

8. Vorrichtung nach einem der Ansprüche 5 bis 7, ferner umfassend: ein Modellvereinfachungsmodul (550), das so konfiguriert ist, dass es ein Radmodell des Fahrzeugs auf der Grundlage der Positionsinformationen des Fahrzeugs bestimmt;
das Fehlerbestimmungsmodul und das Modul zur Bestimmung des Vorderradeinschlagwinkels führen die Bestimmung des Kursfehlers und des Seitenfehlers des Fahrzeugs relativ zur Referenzbahn und des erwarteten Vorderradeinschlagwinkels des Fahrzeugs unter Verwendung des Radmodells und der Referenzbahn durch.

9. Eine Datenverarbeitungsvorrichtung, umfassend,

mindestens einen Prozessor (601); und
einen Speicher (602), der kommunikativ mit dem mindestens einen Prozessor verbunden ist; wobei der Speicher Befehle speichert, die von dem mindestens einen Prozessor ausgeführt werden können, wobei die Befehle, wenn sie von dem mindestens einen Prozessor ausgeführt werden, den mindestens einen Prozessor veranlassen, das Verfahren nach einem der Ansprüche 1-4 durchzuführen.

10. Nicht-transitorisches, computerlesbares Speichermedium (602), das Computerbefehle speichert, wobei die Computerbefehle, wenn sie von einem Computer ausgeführt werden, den Computer veranlassen, das Verfahren nach einem der Ansprüche 1-4 auszuführen.

11. Computerprogrammprodukt, das Computerprogrammanweisungen enthält, wobei die Computerprogrammanweisungen, wenn sie von einem Computer ausgeführt werden, den Computer veranlassen, das Verfahren nach einem der Ansprüche 1 bis 4 durchzuführen.

**Revendications**

1. Procédé de suivi de trajectoire en marche arrière, comprenant :

l'acquisition (S101) d'informations de positionnement et d'une trajectoire de référence d'un véhicule ;
la détermination (S102) d'une erreur de cap et d'une erreur latérale du véhicule par rapport à la trajectoire de référence, sur la base des informations de positionnement et de la trajectoire de référence du véhicule ;
la détermination (S103) d'un angle de braquage de roues avant attendu du véhicule, sur la base de l'erreur de cap, de l'erreur latérale et d'une vitesse du véhicule ; et
l'ajustement (S104) d'un angle de braquage de roues avant réel du véhicule conformément à l'angle de braquage de roues avant attendu du véhicule,
**caractérisé en ce que**
la détermination (S103) de l'angle de braquage de roues avant attendu du véhicule, sur la base de l'erreur de cap, de l'erreur latérale et de la vitesse du véhicule, comprend :
la détermination de l'angle de braquage de roues avant attendu du véhicule en utilisant une équation suivante :

$$\beta = \theta_e + tan^{-1}(\frac{k*cte}{v});$$

où $\beta$ est l'angle de braquage de roues avant attendu du véhicule ;
$\theta_e$ est l'erreur de cap ;
*cte* est l'erreur latérale ;
*v* est la vitesse du véhicule ; et
*k* est un coefficient prédéfini.

2. Procédé selon la revendication 1, dans lequel les informations de positionnement du véhicule comprennent une position de point central d'essieu avant et une orientation de carrosserie de véhicule du véhicule ;
la détermination de l'erreur de cap du véhicule par rapport à la trajectoire de référence, sur la base des informations de positionnement et de la trajectoire de référence du véhicule, comprend :

la détermination (S201) d'un point sur la trajectoire de référence qui est le plus proche de la position de point central d'essieu avant du véhicule, en tant que point le plus proche ;
la détermination (S202) d'une droite tangente de la trajectoire de référence en utilisant le point le plus proche en tant que point de tangence de la droite tangente ; et
la détermination (S203) de l'erreur de cap du véhicule par rapport à la trajectoire de référence sur la base de l'orientation de carrosserie de véhicule du véhicule et d'une direction de la droite tangente de la trajectoire de référence.

3. Procédé selon la revendication 1, dans lequel les informations de positionnement du véhicule comprennent une position de point central d'essieu avant du véhicule ;
la détermination (S102) de l'erreur latérale du véhicule par rapport à la trajectoire de référence, sur la base des informations de position et de la trajectoire de référence du véhicule, comprend :

la détermination d'une distance la plus courte entre la position de point central d'essieu avant du véhicule et la trajectoire de référence, et l'utilisation de la distance la plus courte en tant qu'erreur latérale du véhicule par rapport à la trajectoire de référence.

4. Procédé selon l'une quelconque des revendications 1 à 3, comprenant en outre : la détermination d'un modèle du bicycle du véhicule, sur la base des informations de positionnement du véhicule ;
dans lequel, la détermination de l'erreur de cap et de l'erreur latérale du véhicule par rapport à la trajectoire de référence et à l'angle de braquage de roues avant attendu du véhicule comprend :
la réalisation de la détermination de l'erreur de cap et de l'erreur latérale du véhicule par rapport à la trajectoire de référence et à l'angle de braquage de roues avant attendu du véhicule, en utilisant le modèle du bicycle du véhicule et la trajectoire de référence.

5. Appareil de suivi de trajectoire en marche arrière, comprenant :

un module d'acquisition (410) configuré pour acquérir des informations de positionnement et une trajectoire de référence d'un véhicule ;
un module de détermination d'erreurs (420) configuré pour déterminer une erreur de cap et une erreur latérale du véhicule par rapport à la trajectoire de référence, sur la base des informations de positionnement et de la trajectoire de référence du véhicule ;
un module de détermination d'angle de braquage de roues avant (430) configuré pour déterminer un angle de braquage de roues avant attendu du véhicule sur la base de l'erreur de cap, de l'erreur latérale et

d'une vitesse du véhicule ; et

un module d'ajustement (440) configuré pour ajuster un angle de braquage de roues avant réel du véhicule conformément à l'angle de braquage de roues avant attendu du véhicule, **caractérisé en ce que**

le module de détermination d'angle de braquage de roues avant (430) est configuré pour déterminer l'angle de braquage de roues avant attendu du véhicule en utilisant une équation suivante :

$$\beta = \theta_e + tan^{-1}(\frac{k*cte}{v});$$

où $\beta$ est l'angle de braquage de roues avant attendu du véhicule ;

$\theta_e$ est l'erreur de cap ;

$cte$ est l'erreur latérale ;

$v$ est la vitesse du véhicule ; et

$k$ est un coefficient prédéfini.

6. Appareil selon la revendication 5, dans lequel les informations de positionnement du véhicule comprennent une position de point central d'essieu avant et une orientation de carrosserie de véhicule du véhicule ;

le module de détermination d'erreurs comprend :

un sous-module de détermination d'erreur de cap (521) configuré pour déterminer un point sur la trajectoire de référence qui est le plus proche de la position de point central d'essieu avant du véhicule, en tant que point le plus proche ; déterminer une droite tangente de la trajectoire de référence en utilisant le point le plus proche en tant que point de tangence de la droite tangente ; et déterminer l'erreur de cap du véhicule par rapport à la trajectoire de référence sur la base de l'orientation de carrosserie de véhicule du véhicule et d'une direction de la droite tangente de la trajectoire de référence.

7. Appareil selon la revendication 5, dans lequel les informations de positionnement du véhicule comprennent une position de point central d'essieu avant du véhicule ;

le module de détermination d'erreurs comprend :

un sous-module de détermination d'erreur latérale (522) configuré pour déterminer une distance la plus courte entre la position de point central d'essieu avant du véhicule et la trajectoire de référence, et utiliser la distance la plus courte en tant qu'erreur latérale du véhicule par rapport à la trajectoire de référence.

8. Appareil selon l'une quelconque des revendications 5 à 7, comprenant en outre : un module de simplification de modèle (550) configuré pour déterminer un modèle du bicycle du véhicule, sur la base des informations de positionnement du véhicule ;

le module de détermination d'erreurs et le module de détermination d'angle de braquage de roues avant réalisent la détermination de l'erreur de cap et de l'erreur latérale du véhicule par rapport à la trajectoire de référence et à l'angle de braquage de roues avant attendu du véhicule, en utilisant le modèle du bicycle et la trajectoire de référence.

9. Dispositif de traitement de données, comprenant :

au moins un processeur (601) ; et

une mémoire (602) connectée de manière communicante à l'au moins un processeur, dans lequel la mémoire stocke des instructions exécutables par l'au moins un processeur, les instructions, lorsqu'elles sont exécutées par l'au moins un processeur, amènent l'au moins un processeur à réaliser le procédé selon l'une quelconque des revendications 1 à 4.

10. Support de stockage non transitoire lisible par ordinateur (602) stockant des instructions d'ordinateur, dans lequel les instructions d'ordinateur, lorsqu'elles sont exécutées par un ordinateur, amènent l'ordinateur à exécuter le procédé selon l'une quelconque des revendications 1 à 4.

11. Produit programme d'ordinateur comprenant des instructions de programme d'ordinateur, les instructions de programme d'ordinateur, lorsqu'elles sont exécutées par un ordinateur, amènent l'ordinateur à exécuter le procédé selon l'une quelconque des revendications 1 à 4.

acquiring positioning information and reference trajectory of a vehicle / S101

determining a heading error and a lateral error of the vehicle relative to the reference trajectory based on the positioning information and a reference trajectory of the vehicle / S102

determining an expected front wheel turning angle of the vehicle based on the heading error, the lateral error and speed of the vehicle / S103

adjusting an actual front wheel turning angle of the vehicle according to the expected front wheel turning angle of the vehicle / S104

FIG. 1

determining a point on the reference trajectory which is closest to the front axle central point position of the vehicle, as the closest point / S201

determining a tangent line of the reference trajectory by using the closest point as a tangent point of the tangent line / S202

determining the heading error of the vehicle relative to the reference trajectory based on the vehicle body orientation of the vehicle and direction of the tangent line of the reference trajectory / S203

FIG. 2

FIG. 3

REVERSE TRAJECTORY
TRACKING APPARATUS 400

ACQUISITION
MODULE / 410

ERROR
DETERMINATION
MODULE / 420

FRONT WHEEL TUR-
NING ANGLE DETE-
RMINATION MODULE / 430

ADJUSTMENT
MODULE / 440

FIG. 4

REVERSE TRAJECTORY
TRACKING APPARATUS 500

ACQUISITION MODULE — 410

MODEL SIMPLIFICATION MODULE — 550

ERROR DETERMINATION
MODULE

HEADING ERROR DETER-
MINATION SUB-MODULE — 521

LATERAL ERROR DETER-
MINATION SUB-MODULE — 522

— 520

FRONT WHEEL TURNING ANGLE
DETERMINATION MODULE — 430

ADJUSTMENT
MODULE — 440

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2020052887 A